# EUROPÄISCHE PATENTSCHRIFT

(11) **EP 2 875 686 B1**
(45) Veröffentlichungstag und Bekanntmachung des Hinweises auf die Patenterteilung: **14.09.2016**
(21) Anmeldenummer: 13736486.5
(22) Anmeldetag: 09.07.2013
(51) Int. Cl.: H04W 60/00, H04W 12/06, H04W 88/06

(54) **SCHALTUNGSANORDNUNG FÜR EINE MOBILFUNKEINRICHTUNG EINES KRAFTWAGENS, VERFAHREN ZUM BETREIBEN DER MOBILFUNKEINRICHTUNG UND CHIPKARTE FÜR DIE MOBILFUNKEINRICHTUNG**
SWITCHING ASSEMBLY FOR A MOBILE COMMUNICATION DEVICE OF A VEHICLE, METHOD TO OPERATE THE MOBILE COMMUNICATION DEVICE AND CHIPCARD FOR THE MOBILE COMMUNICATION DEVICE
CIRCUITERIE POUR UN DISPOSITIF RADIO MOBILE DANS UN VEHICULE, PROCEDE DE FONCTIONNEMENT DU DISPOSITIF RADIO MOBILE ET CARTE À PUCE POUR UN DISPOSITIF RADIO MOBILE

(30) Priorität: 21.07.2012 DE 102012014549
(43) Veröffentlichungstag der Anmeldung: 27.05.2015
(73) Patentinhaber: Audi AG, 85045 Ingolstadt (DE)
(72) Erfinder: EHRENTRAUT, Herbert, 92339 Beilngries (DE)
(74) Vertreter: Schuster, Simon
(86) Internationale Anmeldenummer: PCT/EP2013/002014
(87) Internationale Veröffentlichungsnummer: WO 2014/015946

(56) Entgegenhaltungen:
- WO-A2-01/43460
- GB-A- 2 481 702
- US-A1- 2003 181 216

## Beschreibung

Die Erfindung betrifft eine Schaltungsanordnung für eine Mobilfunkeinrichtung eines Kraftwagens. Die Schaltungsanordnung weist zwei Mobilfunkmodule auf, über welche jeweils eine Mobilfunkübertragung gemäß einem vorbestimmten Mobilfunkstandard ermöglicht ist. Die Schaltungsanordnung umfasst des Weiteren eine Ausleseeinrichtung zum Auslesen von Identifikationsdaten aus einer Chipkarte. Unter einer Chipkarte wird im Zusammenhang der Erfindung eine UICC (Universal integrated circuit card - Universelle Karte mit integriertem Schaltkreis) verstanden. Ein anderer Ausdruck für eine solche UICC ist "SIM-Karte" (SIM - Subscriber Identifcation Module, Teilnehmeridentifikationsmodul). Zu der Erfindung gehört auch ein Verfahren zum Betreiben einer Mobilfunkeinrichtung mit der beschriebenen Schaltungsanordnung sowie auch eine UICC, d. h. eine Chipkarte, in welcher ein Teilnehmeridentifikationsmodul (SIM) integriert ist.

Eine Mobilfunkeinheit (Mobile Equipment), wie sie beispielsweise in einem Smartphone integriert sein kann, weist in der Regel ein Mobilfunkmodul auf, um über eine Funkschnittstelle eine Mobilfunkverbindung in ein Mobilfunknetzwerk aufzubauen. Ein Mobilfunkmodul ist im Zusammenhang mit der Erfindung diejenige Schaltungseinheit, die zwischen digitalen Nutzdaten, die über die Mobilfunkverbindung übertragen werden sollen, und analogen Mobilfunksignal wandeln, die dann über Antennen abgestrahlt werden können. Mobilfunkmodule sind im Handel unter der Bezeichnung GSM-Modul (GSM - Global System for Mobile Communications), UMTS-Modul (UMTS - Universal Mobile Telecommunications System) und LTE-Modul (LTE - Long-Term-Evolution) erhältlich.

Um mit einer Mobilfunkeinheit den Empfang von eingehenden Anrufen oder den Rufaufbau zu ermöglichen, muss die Mobilfunkeinheit bei einem Mobilfunknetzwerk angemeldet werden. Hierzu ist ein SIM in der Mobilfunkeinheit nötig. Das SIM ist ein kleiner Prozessor mit Speicher, durch welchen die Mobilfunkeinheit einem Netz zugeordnet und authentifiziert wird. Für diese Zwecke sind auf dem SIM geheime Nummern und Algorithmen gespeichert. Im Zusammenhang mit den Mobilfunknetzwerken UMTS und LTE wird das SIM auch als USIM bezeichnet.

Die gleichzeitige Übertragung von Sprache und Daten ist derzeit nur mit dem Mobilfunkstandard UMTS möglich. Der im GSM Standard definierte Verfahren zur gleichzeitigen Übertragung von Sprache und Daten wird von derzeitigen GSM-Mobilfunknetzen kaum unterstützt. LTE Mobilfunknetzwerke unterstützen derzeit keine Sprachübertragung sondern fallen zur Übertragung von Sprache auf einen älteren Standard UMTS oder GSM zurück. In weiten Regionen wird derzeit ausschließlich der Standard GSM unterstützt. Wird nur ein einzelnes Funkmodul verwendet wird im Falle einer Sprachübertragung die Datenübertragung unterbrochen.

Die Mobilfunkeinheit kann zwei Mobilfunkmodule enthalten, um für den Fall, dass der vorhandene Mobilfunkstandard keine gleichzeitige Übertragung von Sprache und Daten erlaubt, mit dem ersten Mobilfunkmodul eine Datenverbindung und mit dem zweiten Mobilfunkmodul eine Sprachverbindung aufzubauen. Nach dem derzeitigen Stand der Technik werden beim gelichzeitigen Betrieb der beiden Funkmodule zwei SIM-Karten benötigt.

Im Zusammenhang mit der Einführung des Mobilfunkstandards LTE steht zu erwarten, dass neuartige Probleme mit der Mobilfunkversorgung in der Zeit der Einführung des neuen Mobilfunkstandards auftreten. Hier könnten sich nämlich Versorgungslücken ergeben, die nicht gebietsabhängig, sondern diensteabhängig sind. Derzeit unterstützen die LTE Mobilfunknetzwerke nicht den von LTE vorgesehenen Standard VoLTE zur Übertragung von Sprache. Es ist daher nicht voraussehbar, wie robust Telefonieverbindungen sein werden. Die Implementierung von LTE und ähnlicher, neuartiger Mobilfunkstandards in einem Fahrzeug wird deshalb erfahrungsgemäß mit technischen Schwierigkeiten verbunden sein, sodass es wünschenswert ist, eine redundante Lösung oder Fallback-Lösung zu haben.

Aus der GB 2481702 A ist ein Verfahren bekannt, mittels welchem in einem Kraftfahrzeug zwei Mobilfunkverbindungen auf der Grundlage von zwei Mobilfunkmodulen bereitgestellt werden. Die Mobilfunkverbindungen können in dasselbe oder in unterschiedliche Mobilfunknetze aufgebaut werden.

Aufgabe der vorliegenden Erfindung ist es, in einem Kraftwagen mit kostengünstigen schaltungstechnischen Mitteln eine zuverlässige Mobilfunkanbindung sowohl für Telefonie als auch für die Übertragung anderer digitaler Daten durch Steuergeräte und Personalcomputer zu ermöglichen.

Die Aufgabe wird durch eine Schaltungsanordnung gemäß Patentanspruch 1 gelöst. Vorteilhafte Weiterbildungen der Erfindung sind durch die Unteransprüche gegeben.

Die erfindungsgemäße Schaltungsanordnung ist Bestandteil einer Mobilfunkeinrichtung eines Kraftwagens. Sie weist ein ersten Mobilfunkmodul für eine Mobilfunkübertragung gemäß einem ersten Mobilfunkstandard, bevorzugt UMTS oder LTE gleichzeitig mit GSM, und ein zweites Mobilfunkmodul für eine Mobilfunkübertragung gemäß einem zweiten Mobilfunkstandard, bevorzugt GSM, auf. Zu der Schaltungsanordnung gehört des Weiteren eine Ausleseeinrichtung zum Auslesen von Identifikationsdaten aus einer Chipkarte, also einer UICC. Bei den Identifikationsdaten handelt es sich insbesondere um solche, wie sie durch SIMs erzeugt werden.

Die erfindungsgemäße Schaltungsanordnung ist nun dazu eingerichtet, die beiden Mobilfunkmodule zugleich zu betreiben. Hierzu ist die Ausleseeinrichtung dazu ausgelegt für den zeitgleichen Betrieb der beiden Mobilfunkmodule Identifkationsdaten, insbesondere IMSIs, von zwei Teilnehmeridentifkationsmodulen (SIM) aus der Chipkarte zu empfangen und die Identifikationsdaten jeweils eines Teilnehmeridentifikationsmoduls an jeweils eines der beiden Mobilfunkmodule zu übertragen.

Ein Verfahren sieht entsprechend vor, dass beim Betreiben einer Mobilfunkeinrichtung eines Kraftwagens die Mobilfunkeinrichtung zeitgleich über zwei Mobilfunkmodule angemeldet ist. Hierzu wird die Mobilfunkeinrichtung sowohl über ihr erstes Mobilfunkmodul als auch über ihr zweites Mobilfunkmodul in einem Mobilfunknetzwerk angemeldet. Dies wird auf der Grundlage von Identifikationsdaten zweier Teilnehmeridentifikationsmodule durchgeführt. Unter dem Zustand "angemeldet" wird hierbei verstanden, dass das jeweilige Mobilfunkmodul in an sich bekannter Weise die Anmeldeprozedur zum Registrieren der Mobilfunkeinheit in einer Zelle des jeweiligen Mobilfunknetzwerks erfolgreich durchlaufen hat und das Mobilfunkmodul somit jederzeit einen Rufaufbau initialisieren kann oder auch über das Mobilfunknetzwerk angerufen werden kann. Der Zustand des Angemeldetseins umfasst des Weiteren auch denjenigen Zeitraum, in während das Mobilfunkmodul aktiv Daten überträgt oder empfängt, sei es im Rahmen von Telefonie oder einer anderen Art der Nutzdatenübertragung. Durch das erfindungsgemäße Verfahren wird die Mobilfunkeinheit durch beide Mobilfunkmodule auf der Grundlage von Identifikationsdaten unterschiedlicher Teilnehmermodule (SIM), also insbesondere unterschiedlicher IMSI, in den jeweiligen Mobilfunknetzwerken angemeldet. Bei dem ersten und dem zweiten Mobilfunknetzwerk kann es sich um ein- und dasselbe Mobilfunknetzwerk oder aber um zwei verschiedene Mobilfunknetzwerke handeln. Bei der Realisierung der Erfindung ist man somit frei in der Wahl in Bezug auf den Mobilfunkstandard des ersten Mobilfunkmoduls und des zweiten Mobilfunkmoduls.

Die erfindungsgemäße Schaltungsanordnung weist den Vorteil auf, dass für einen Benutzer des Kraftwagens mit der entsprechenden Mobilfunkeinheit eine Mobilfunkverbindung über das jeweils geeignete Mobilfunkmodul aufbauen kann, wenn er beispielsweise mit einem Computer im Internet surfen möchte und währenddessen auch telefonieren möchte oder Telefonanrufe empfangen können möchte. Während des Austausches von Daten mit dem Internet im Rahmen des Internetsurfens günstigerweise mit einem LTE-Modul durchgeführt wird, kann es sinnvoll sein, Telefonieverbindungen ausschließlich über ein GSM-Modul aufzubauen. Dies kann beispielsweise zur Vermeidung der eingangs beschriebenen Probleme sinnvoll sein. Bei der erfindungsgemäßen Schaltungsanordnung erfordert dies dabei nicht, dass das LTE-Modul deaktiviert werden muss. Somit kann auch während des Betriebs eines Telefons (GSM) der Datenaustausch mit dem Internet weiterhin z.B. über eine LTE-Verbindung erfolgen und er muss nicht über den verhältnismäßig schmalwandigen GSM-Standard erfolgen.

Die erfindungsgemäße Schaltungsanordnung bietet hierbei den zusätzlichen Vorteil, dass ein Benutzer der Mobilfunkeinrichtung nicht zwei SIM-Karten für den Betrieb der Mobilfunkeinrichtung benötigt. Denn die Ausleseeinrichtung ist dazu ausgelegt, die Identifikationsdaten aus einer einzigen UICC auszulesen. In diesem Zusammenhang sieht ein weiterer Aspekt der Erfindung eine nicht beanspruchte Chipkarte zum Einlegen in eine Ausführungsform der erfindungsgemäßen Schaltungsanordnung vor. Diese Chipkarte weist zwei Teilnehmeridentifikationsmodule (SIM) auf. Die Chipkarte weist hierbei einen bedeutenden Unterschied zu ähnlichen Chipkarten auf, wie sie aus dem Stand der Technik bekannt sind, beispielsweise im Zusammenhang mit dem Mobilfunk-Dienst "DuoBill" des Unternehmens Vodafone. Diese Chipkarten aus dem Stand der Technik sind dazu ausgelegt, an ein einziges Mobilfunkmodul zwei unterschiedliche IMSI auszugeben, je nachdem, ob man einen privaten Telefonanruf oder einen geschäftlichen Telefonanruf durchführen möchte. Hierzu kann eine solche Chipkarte zwei SIM aufweisen von denen aber jeweils nur eines zu einem bestimmten Zeitpunkt aktiv betreibbar ist.

Im Gegensatz dazu ist die Chipkarte dazu ausgelegt, Identifikationsdaten für zwei zeitgleich angemeldete Mobilfunkmodule bereitzustellen und hierbei mittels eines ersten Teilnehmeridentifikationsmoduls die Identifikationsdaten für das erste Mobilfunkmodul und mittels des zweiten Teilnehmeridentifikationsmoduls die Identifikationsdaten für das zweite Mobilfunkmodul auszugeben. Es geht hier also nicht darum, zwei SIM für ein- und dasselbe Mobilfunkmodul bereitzustellen, sondern mit einer Chipkarte zwei Mobilfunkmodule auch zeitgleich aktiv zu betreiben. Für eine Verwendung der Chipkarte wird das Verfahren entsprechend dahingehend weitergebildet, dass die Identifikationsdaten aus ein- und derselben Chipkarte empfangen werden, auf welcher eben die beiden Teilnehmeridentifikationsmodule bereitgestellt sind.

Bevorzugt weist die Chipkarte dabei einen Anschluss auf, der dazu ausgelegt ist, die Identifikationsdaten beider Teilnehmeridentifikationsmodule über dieselben elektrischen Kontakte an ein externes Gerät auszugeben. Dann kann die Chipkarte den herkömmlichen, von SIM-Karten bekannten Anschluss aufweisen, sodass die erfindungsgemäße Chipkarte auch in herkömmlichen Geräten verwendet werden kann.

Im Folgenden werden weitere vorteilhafte Ausführungsformen der erfindungsgemäßen Schaltungsanordnung beschrieben.

Gemäß einer Ausführungsform ist das zweite Mobilfunkmodul nur indirekt über das erste Mobilfunkmodul mit der Ausleseeinheit für die Datenübertragung gekoppelt. Das erste Mobilfunkmodul ist entsprechend dazu ausgelegt, die Identifikationsdaten für das zweite Mobilfunkmodul von der Ausleseeinrichtung zu empfangen und an das zweite Mobilfunkmodul weiterzuleiten. Bei dieser Ausführungsform der Schaltungsanordnung ergibt sich der Vorteil, dass die Anzahl der zur Ausleseeinheit führenden elektrischen Verbindungsleitungen nicht größer sein muss als bei einer Schaltungsanordnung mit nur einem Mobilfunkmodul. Dies ist insbesondere dann von Vorteil, wenn sich die Ausleseinheit einerseits und die Mobilfunkmodule andererseits auf unterschiedlichen Schaltungsplatinen befinden. Dies ist beispielsweise dann der Fall, wenn die beiden Mobilfunkmodule auf einer Einsteckkarte angeordnet sind, die in einen Einsteckschacht einer Trägerplatine gesteckt werden, an welche die Ausleseeinheit angeschlossen ist.

Bevorzugt ist das erste Mobilfunkmodul über einen USB (USB - Universal Serial Bus) mit der Ausleseeinrichtung gekoppelt. Dann ist es in vorteilhafter Weise möglich, die Identifikationsdaten für das zweite Mobilfunkmodul über eine einzelne serielle Leitung von der Ausleseeinrichtung zum ersten Mobilfunkmodul zu übertragen, von wo sie dann weitergeleitet werden können.

Moderne Mobilfunkmodule, wie beispielsweise ein LTE-Modul, haben die Möglichkeit, zwei oder mehr Antennen gleichzeitig für einen Empfang zu nutzen, was auch als Antennendiversität bezeichnet wird. Die erfindungsgemäße Schaltungsanordnung weist in diesem Zusammenhang eine Antenneneinrichtung auf, welche eine Hauptantenne und eine Nebenantenne umfasst. Unter einer Hauptantenne ist hierbei eine Antenne zu verstehen, die eine günstigere Sende- und Empfangscharakteristik aufweist als die Nebenantenne. Insbesondere weist die Hauptantenne eine geringere Direktivität als die Nebenantenne auf, d. h. mit der Hauptantenne lassen sich in einer horizontalen Ebene in mehr Richtungen Mobilfunksignale ohne signifikante Funksignaldämpfungen aussenden und empfangen als mit der Nebenantenne. Dies ist beispielsweise der Fall, wenn die Hauptantenne auf einem Dach des Kraftwagens und die Nebenantenne in einem Stoßfänger angeordnet ist. Die Schaltungsanordnung mit der Hauptantenne und der Nebenantenne umfasst des Weiteren eine Schalteinrichtung, die dazu ausgelegt ist, die beiden Mobilfunkmodule abwechselnd mit der Hauptantenne zu verbinden. Falls das zweite Mobilfunkmodul zwar in seinem Mobilfunknetzwerk angemeldet ist, aber keine aktive Verbindung zu dem zweiten Mobilfunknetzwerk aufgebaut ist (also keine aktive Nutzdatenübertragung), so verbindet die Schalteinrichtung das erste Mobilfunkmodul mit der Hauptantenne und das zweite Mobilfunkmodul nur mit der Nebenantenne. Mit dem ersten Mobilfunkmodul ist also sowohl die Hauptantenne als auch (über eine weitere elektrische Verbindung) die Nebenantenne für die Nutzung der Antennendiversität verbunden. Währenddessen kann das zweite Mobilfunkmodul Steuerdaten von einer Mobilfunkstation über die Nebenantenne empfangen.

Falls das zweite Mobilfunkmodul angemeldet ist und dann auch eine aktive Verbindung aufbaut, verbindet die Schalteinrichtung das erste Modul mit der Nebenantenne und das zweite Mobilfunkmodul mit der Hauptantenne. So ist es ermöglicht, dass das zweite Mobilfunkmodul die günstigere Antennencharakteristik der Hauptantenne nutzt und währenddessen das erste Mobilfunkmodul weiterhin über die Nebenantenne empfängt oder sendet. Handelt es sich bei dem zweiten Mobilfunkmodul um ein GSM-Modul, kann so eine robuste Telefonie bereitgestellt werden und währenddessen ein unterbrechungsfreier Datenverkehr über das erste Mobilfunkmodul (beispielsweise ein LTE-Modul) ermöglicht werden.

Die erfindungsgemäße Schaltungsanordnung kann selbstverständlich auch mehr als zwei Mobilfunkmodule und auch mehr als zwei Antennen umfassen.

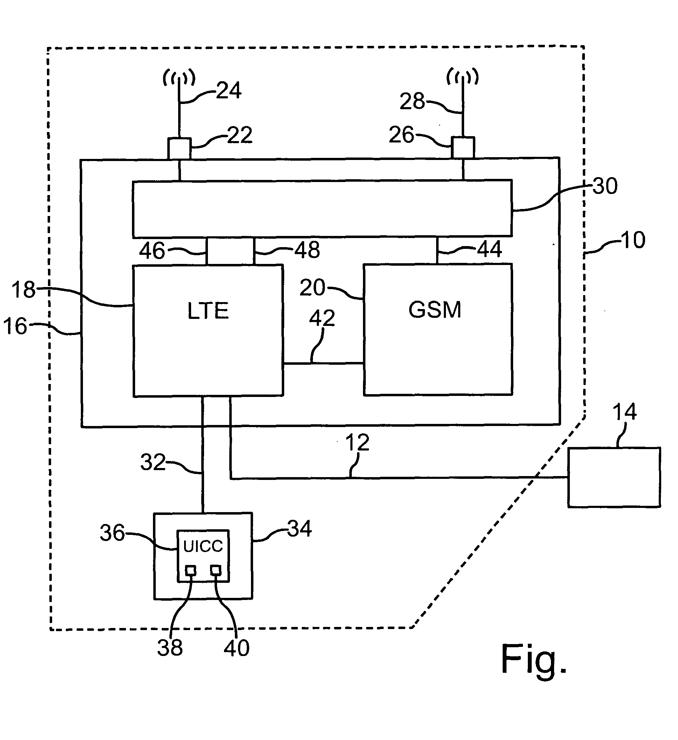

Im Folgenden wird die Erfindung noch einmal genauer anhand eines konkreten Ausführungsbeispiels erläutert. Dazu zeigt die Figur (Fig.) ein schematisiertes Blockschaltbild einer bevorzugten Ausführungsform der erfindungsgemäßen Schaltungsanordnung.

Bei dem im folgenden erläuterten Beispiel stellen die beschriebenen Komponenten der Schaltungsanordnung jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In der Figur ist eine Mobilfunkeinrichtung 10 gezeigt, die über eine oder mehrere Kommunikationsleitungen 12 mit einem Steuerprozessor 14 verbunden sein kann, der über die Mobilfunkeinrichtung 10 Sprachdaten für ein Telefongespräch sowie auch andere digitale Nutzdaten, beispielsweise über eine Internetverbindung, mit einem oder mehreren (nicht dargestellten) Mobilfunknetzwerken austauscht. Bei dem Steuerprozessor 14 kann es sich beispielsweise um einen Steuerprozessor eines Infotainmentsystems handeln, welches ein Telefongerät und/oder einen Personalcomputer aufweisen oder welches mit einem Telefongerät und/oder einem Personalcomputer verbunden sein kann.

Die Mobilfunkeinrichtung umfasst eine Einsteckkarte 16, auf welcher ein erstes Mobilfunkmodul 18, hier beispielsweise ein LTE-Modul, und ein zweites Mobilfunkmodul 20, hier beispielsweise ein GSM-Modul, angeordnet sind. An einem Hauptantennenanschluss 22 ist eine Hauptantenne 24 und an einem Nebenantennensanschluss 26 eine Nebenantenne 28 angeschlossen. Die Hauptantenne 24 kann beispielsweise auf einem Dach des Kraftwagens, die Nebenantenne 28 beispielsweise in einer Stoßstange angeordnet sein. Die Antennenanschlüsse 22, 26 sind über eine Schalteinrichtung 30 mit den beiden Mobilfunkmodulen 18, 20 verbunden. Das erste Mobilfunkmodul 18 ist über eine Datenleitung 32 mit einer Ausleseeinrichtung 34 verbunden, die einen Steckschacht aufweist, in welchem sich eine Chipkarte 36, d.h. eine UICC, befindet. Die Chipkarte 36 weist zwei SIM 38, 40. Das SIM 38 ist für den Betrieb des ersten Mobilfunkmoduls 18, das zweite SIM 40 ist für den Betrieb des zweiten Mobilfunkmoduls 20 ausgelegt. Das zweite Mobilfunkmodul 20 ist indirekt über das erste Mobilfunkmodul 18 mit der Ausleseeinrichtung 34 gekoppelt. Hierzu sind das erste und das zweite Mobilfunkmodul 18, 20 über Koppelleitungen 42 miteinander elektrisch verbunden.

Das LTE-Modul 18 kann über einen USB mit dem Steuerprozessor 14 verbunden sein. Die Leitungen des USB sind dann durch die Kommunikationsleitungen 12 realisiert. Die Steuerung des Steuerprozessors 14 für das GSM-Modul 20 wird durch das LTE-Modul 18 durchgeschleift oder von diesem bei Bedarf noch entsprechend beeinflusst. Es kann auch vorgesehen sein, dass das LTE-Modul 18 das GSM-Modul 20 selbstständig steuert.

Beide Mobilfunkmodule 18, 20 teilen sich die beiden Antennen 24, 28. Die Hauptantenne 24 hat bessere Empfangseigenschaften als die Nebenantenne 28. Bedarfsweise wird die Hauptantenne dem LTE-Modul 18 oder dem GSM-Modul 20 zugeschaltet. Dies wird durch entsprechende Schalter der Schalteinrichtung 30 bewirkt. Während eines Telefonats ist die Hauptantenne 24 dem GSM-Modul 20 zugeschaltet. Hierzu ist der Hauptantennenanschluss 22 über einen (nicht dargestellten) Schalter mit einem Signalanschluss 44 des zweiten Mobilfunkmoduls 20 elektrisch gekoppelt. In diesem Schaltzustand der Schalteinrichtung 30 sind sowohl ein Sende- und Empfangssignalanschluss 46 als auch ein sekundärer Empfangsanschluss 48 des ersten Mobilfunkmoduls 18 mit dem Nebenantennenanschluss 26 über die Schalteinrichtung 30 elektrisch gekoppelt. Vorzugsweise steuert das GSM-Modul 20 die Umschaltlogik der Antennen, d. h. die Schalteinrichtung 30.

Zur Benutzung von LTE-Modul 18 und GSM-Modul 20 zur gleichen Zeit müsste eigentlich jeweils eine SIM-Karte zur Verfügung gestellt werden. Bei der Mobilfunkeinrichtung 10 sind dagegen die beiden SIM-Felder 38, 40 auf derselben Chipkarte 36 bereitgestellt. Vorzugsweise steht die Chipkarte 36 über ein Standard-SIM-Karten-Interface mit dem LTE-Modul 18 in Verbindung, z. B. einen USB. Die Identifikationsdaten von der zweiten SIM 40 werden durch das LTE-Modul 18 hindurch von diesem zum GSM-Modul 20 durchgeschleift.

Durch die Erfindung ergibt sich somit insgesamt der Vorteil, dass nur eine Chipkarte 36 verwendet werden muss, um zwei Mobilfunkmodule 18, 20 gleichzeitig betreiben zu können.

## Patentansprüche

1. Schaltungsanordnung für eine Mobilfunkeinrichtung (10) eines Kraftwagens, umfassend:
- ein erstes Mobilfunkmodul (18) für eine Mobilfunkübertragung gemäß einem ersten Mobilfunkstandard,
- ein zweites Mobilfunkmodul (20) für eine Mobilfunkübertragung gemäß einem zweiten Mobilfunkstandard,
- eine Ausleseeinrichtung (34) zum Auslesen von Identifikationsdaten aus einer Chipkarte (36),
wobei die Schaltungsanordnung dazu eingerichtet ist, die beiden Mobilfunkmodule (18, 20) zugleich zu betreiben,
**dadurch gekennzeichnet, dass**
die Ausleseeinrichtung (34) dazu ausgelegt ist, für den zeitgleichen Betrieb der beiden Mobilfunkmodule (18, 20) Identifikationsdaten von zwei Teilnehmeridentifikationsmodulen (38, 40) von der Chipkarte (36) zu empfangen und die Identifikationsdaten jeweils eines Teilnehmeridentifikationsmoduls (38, 40) an eines der beiden Mobilfunkmodule (18, 20) zu übertragen,
und **gekennzeichnet durch**: eine Antenneneinrichtung, welche eine Hauptantenne (24) und eine Nebenantenne (28) umfasst, wobei die Hauptantenne eine günstigere Sende- und Empfangscharakteristik aufweist als die Nebenantenne; und eine Schalteinrichtung (30), die dazu ausgelegt ist, das erste Mobilfunkmodul (18) mit der Hauptantenne (24) und der Nebenantenne (28) und das zweite Mobilfunkmodul mit der Nebenantenne (28) elektrisch zu koppeln, falls das zweite Mobilfunkmodul (20) zwar angemeldet ist, aber keine aktive Verbindung zu dem zweiten Mobilfunknetzwerk aufgebaut hat, und das erste Mobilfunkmodul (18) mit der Nebenantenne (28) und das zweite Mobilfunkmodul (20) mit der Hauptantenne (24) elektrisch zu koppeln, falls das zweite Mobilfunkmodul (20) angemeldet ist und eine aktive Verbindung aufbaut.

2. Schaltungsanordnung nach Anspruch 1, wobei das zweite Mobilfunkmodul (20) nur indirekt über das erste Mobilfunkmodul (18) mit der Ausleseeinrichtung (34) für eine Datenübertragung gekoppelt ist und das erste Mobilfunkmodul (18) dazu ausgelegt ist, die Identifikationsdaten für das zweite Mobilfunkmodul (20) von der Ausleseeinrichtung (34) zu empfangen und an das zweite Mobilfunkmodul (20) weiterzuleiten.

3. Schaltungsanordnung nach einem der vorhergehenden Ansprüche, wobei das erste Mobilfunkmodul (18) über einen USB (32) mit der Ausleseeinrichtung gekoppelt ist.

4. Schaltungsanordnung nach einem der vorhergehenden Ansprüche, wobei der erste Mobilfunkstandard einer aus den Mobilfunkstandards UMTS oder LTE oder GSM und der zweite Mobilfunkstandard GSM ist.

5. Schaltungsanordnung nach einem der vorhergehenden Ansprüche, wobei
die Mobilfunkeinrichtung (10) dazu ausgelegt ist, Sprachdaten über eine Mobilfunkverbindung des zweiten Mobilfunkmoduls (20) und übrige Nutzerdaten über eine Mobilfunkverbindung des ersten Mobilfunkmoduls (18) zu übertragen.

## Claims

1. Circuit arrangement for a mobile communications device (10) of a motor vehicle, comprising
- a first mobile communications module (18) for a mobile communications transmission according to a first mobile communications standard,
- a second mobile communications module (20) for a mobile communications transmission according to a second mobile communications standard,
- a reading unit (34) for reading identification data from a chip card (36), wherein the circuit arrangement is configured to operate the first and second mobile communications modules (18, 20) simultaneously,
**characterized in that**
the reading unit (34) is configured to receive from the chip card (36) for simultaneous operation of the first and second mobile communications modules (18, 20) identification data from two subscriber identification modules (38, 40) and to transmit the identification data of a subscriber identification module (38, 40) to a respective one of the first and second mobile communications modules (18, 20), **characterized by**:
an antenna assembly comprising a primary antenna (24) and a secondary antenna (28), the primary antenna having more favourable transmission and receiving characteristics than the secondary antenna, and a switching device (30) configured to electrically couple the first mobile communications module (18) with the primary antenna (24) and the secondary antenna (28) and to electrically couple the second mobile communications module with the secondary antenna (28) if the second mobile communications module (20), although being registered, has not established an active connection to the second mobile communications network, and to electrically couple the first mobile communications module (18) with the secondary antenna (28) and the second mobile communications module (20) with the primary antenna (24) if the second mobile communications module (20) is registered and has established an active connection.

2. Circuit arrangement according to claim 1, wherein the second mobile communications module (20) is coupled with the reading unit (34) only indirectly via the first mobile communications module (18) for data transmission, and the first mobile communications module (18) is configured to receive the identification data for the second mobile module (20) from the reading unit (34) and forward the identification data to the second mobile communications module (20).

3. Circuit arrangement according to any of the preceding claims, wherein the first mobile communications module (18) is coupled with the reading unit via a USB (32).

4. Circuit arrangement according to any of the preceding claims, wherein the first mobile communications standard is a standard selected from UMTS or LTE or GSM, and the second mobile communications standard is GSM.

5. Circuit arrangement according to any of the preceding claims, wherein the mobile communications unit (10) is configured to transmit voice data via a wireless connection of the second mobile communications module (20) and to transmit other user data via a wireless connection of the first mobile communications module (18).

## Revendications

1. Ensemble formant circuit pour un dispositif de radiocommunication mobile (10) d'un véhicule à moteur, comprenant :
- un premier module de radiocommunication mobile (18) pour une transmission de radiocommunication mobile selon une première norme de radiocommunication mobile,
- un deuxième module de radiocommunication mobile (20) pour une transmission de radiocommunication mobile selon une deuxième norme de radiocommunication mobile,
- un dispositif de lecture (34) pour lire des données d'identification à partir d'une carte à puce (36),
dans lequel l'ensemble formant circuit est mis au point afin de faire fonctionner de manière simultanée les deux modules de radiocommunication mobile (18, 20), **caractérisé en ce**
**que** le dispositif de lecture (34) est configuré afin de recevoir de la carte à puce (36) des données d'identification de deux modules d'identification d'abonné (38,40) pour le fonctionnement simultané des deux modules de radiocommunication mobile (18, 20) et afin de transmettre les données d'identification respectivement d'un module d'identification d'abonné (38, 40) à l'un des deux modules de radiocommunication mobile (18, 20),
et **caractérisé par** : un dispositif d'antenne, qui comprend une antenne principale (24) et une antenne secondaire (28), l'antenne principale présentant une caractéristique d'émission et de réception plus favorable que l'antenne secondaire ; et un dispositif de commutation (30) qui est configuré afin de coupler de manière électrique le premier module de radiocommunication mobile (18) à l'antenne principale (24) et à l'antenne secondaire (28) et le deuxième module de radiocommunication mobile à l'antenne secondaire (28) dans le cas où le deuxième module de radiocommunication mobile (20) est certes connecté mais n'a toutefois pas établi une liaison active avec le deuxième réseau de radiocommunication mobile, et afin de coupler de manière électrique le premier module de radiocommunication mobile (18) à l'antenne secondaire (28) et le deuxième module de radiocommunication mobile (20) à l'antenne principale (24) dans le cas où le deuxième module de radiocommunication mobile (20) est connecté et établit une liaison active.

2. Ensemble formant circuit selon la revendication 1, dans lequel le deuxième module de radiocommunication mobile (20) est couplé seulement indirectement, par l'intermédiaire du premier module de radiocommunication mobile (18), au dispositif de lecture (34) pour une transmission de données et le premier module de radiocommunication mobile (18) est configuré afin de recevoir du dispositif de lecture (34) les données d'identification pour le deuxième mobile de radiocommunication mobile (20) et afin de les transférer au deuxième module de radiocommunication mobile (20).

3. Ensemble formant circuit selon l'une quelconque des revendications précédentes, dans lequel le premier module de radiocommunication mobile (18) est couplé au dispositif de lecture par l'intermédiaire d'un USB (32).

4. Ensemble formant circuit selon l'une quelconque des revendications précédentes, dans lequel la première norme de radiocommunication mobile est une norme parmi les normes de radiocommunication mobile UMTS ou LTE ou GSM et la deuxième norme de radiocommunication mobile est la norme GSM.

5. Ensemble formant circuit selon l'une quelconque des revendications précédentes, dans lequel le dispositif de radiocommunication mobile (10) est configuré afin de transmettre des données vocales par l'intermédiaire d'une première liaison de radiocommunication mobile du deuxième module de radiocommunication mobile (20) et d'autres données d'utilisateur par l'intermédiaire d'une liaison de radiocommunication mobile du premier module de radiocommunication mobile (18).
